# EUROPEAN PATENT SPECIFICATION

(11) **EP 1 257 885 B1**
(45) Date of publication and mention of the grant of the patent: **15.10.2003**
(21) Application number: 01901159.2
(22) Date of filing: 17.01.2001
(51) Int. Cl.: G05B 19/10, A01G 25/16, G05D 7/06

(54) **ELECTRONIC CONTROL DEVICE FOR SOLENOID VALVES OF WATERING SYSTEMS**
ELEKTRONISCHE REGELEINHEIT FÜR MAGNETVENTILE IN BEWÄSSERUNGSSYSTEMEN
DISPOSITIF DE COMMANDE ELECTRONIQUE DE VANNES ELECTROMAGNETIQUES DE SYSTEMES D'IRRIGATION

(30) Priority: 18.01.2000 IT MI20000053
(43) Date of publication of application: 20.11.2002
(73) Proprietor: CLABER S.P.A., I-33080 Fiume Veneto Pordenone (IT)
(72) Inventor: BRUNDISINI, Andrea, I-40137 Bologna (IT); ROMAN, Gianfranco, I-33087 Pasiano (IT)
(74) Representative: Mittler, Enrico
(86) International application number: EP0100507
(87) International publication number: WO01053899

(56) References cited:
- EP-A- 0 703 516
- WO-A-91/03156
- US-A- 4 807 664
- US-A- 5 025 361
- US-A- 5 337 957
- US-A- 5 805 444

## Description

The present invention refers to an electronic device for the control of watering systems.

Generally there are known watering systems for green areas or grounds that are provided with valve means for the interception of a watering fluid and with control units that operate on said valve means in order to determine the instants for the starting and turning off of the watering system during the span of the day, in pre-established days of the week, on the basis of a programming carried out by the user. In this way the user is relieved from the tasks to start and to turn off the watering system and it is also possible to guarantee the watering of the green areas or of grounds both during night time as well as in the periods of absence of the same user.

US-A-4807664 discloses an electronic device for the control of watering systems, in which the days of a week are shown on a programming display. Particularly, the user firstly selects the day of the week to be programmed and then the user sets various watering programs, each of which has a start time and a duration inside said week. The sequence of the selected watering program is repeated every week until interrupted by the user or by a low battery condition.

WO-A-91/03156 discloses the use of a calendar in an irrigation control system. The calendar is organised as a matrix which have the days of a month in the columns and the identification number of watering valves in the rows. The calendar is subdivided in twenty-six periods each of which composed by a fortnight days. The information regarding the climatic conditions that are conventionally expected in a certain locality and during a certain period is coupled to the calendar.

US-A-5805444 discloses the use of a time indicator in a control system using a graphical interface.

A programmable electronic device to control watering systems is described in EP-A-0703516. Such device comprises a processing unit provided with a memory to memorise the programming data of the processing unit, a display controlled by the processing unit and a keyboard that is operatively connected with the same processing unit. The keyboard comprises three keys in order to control the sequential visualisation, on the visualisation device, of a plurality of menu pages of programming data that is memorised in the programming unit, where each page corresponds to a particular group of data that must be programmed in the processing unit.

The menu comprises a page for the setting of the current hour and minute, pages for the setting of an instant for the beginning and the end of every watering period, and a page for the setting of the days of the week in which there is the activation of the watering periods. One of the keys of the keyboard is operable so as to control the activation of a procedure to enter and/or to change the programming data in the page that is currently being visualised by the display as well as the one for the memorisation of the data being entered and to stop the procedure, while the other two keys are operable to enter and/or to change the programming data of the watering in the page currently visualised during said procedure and in order to carry out the change of the visualised page at the end of the procedure.

It is therefore possible to program one or more watering periods during one or more days of the week. However, the programming of watering periods in one or more days of an entire month is not possible nor the programming for one or more days of every month in an entire year.

In view of the state of the art herein described, object of the present invention is to realise an electronic control device for solenoid valves for watering systems that solves the aforesaid problem. According to the present invention, such object is attained by means of an electronic device as claimed in claim 1.

Owing to the present invention it is possible to provide an electronic control device for solenoid valves of watering systems that, taking advantage of only three keys of a keyboard and a date indicator of the days of a current month on a visualisation device, allows to program the watering periods for any day of any month in an entire year or longer.

Such device can control a single solenoid valve, and in such case it is mounted on the same, or it can be used as a central unit in order to control a set of solenoid valves at a distance.

The characteristics and the advantages of the present invention will become evident from the following detailed description of an embodiment thereof, that is illustrated as a non limiting example in the enclosed drawings, in which:
Figure 1 is a block diagram of an electronic device according to the present invention;
Figure 2 is a front view of the aforesaid device;
Figures from 3 to 18 illustrate the various stages of a programming process of the aforesaid electronic device;
Figures from 19 to 22 show the various stages of a process for the manual control of the electronic device.

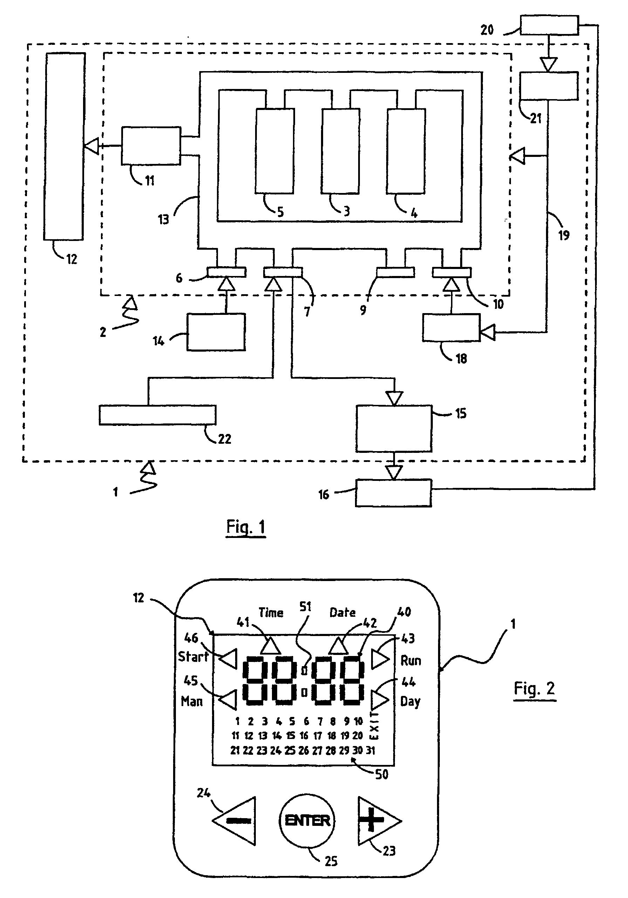

In figure 1 a programmable electronic device 1 according to the present invention is shown. Such device comprises a control unit 2 that is made up of a microprocessor; the microprocessor 2 comprises a processing unit 3, a ROM memory block 4, a RAM memory block 5, data input/output ports 6-10, and a control circuit 11 for a liquid crystals display 12 that is external to the control unit 2; the processing unit 3, the memories 4 and 5, the input/output ports 6-10 and the control circuit 11 communicate through a signal bus 13. The ports 6-9 allow the input and the output of digital signals, while the port 10, provided with an analogue-to-digital converter (not shown), receives from outside of the microprocessor 2 analogue type signals that it converts into digital type signals, that are afterwards processed by the processing unit 3.

In addition, the device 1 comprises: one keyboard 14, connected with the port 6 of the microprocessor 2; a piloting device 15 of a bistable valve 16 that intercepts the flow of the watering liquid, with said piloting device connected with the port 7 of the microprocessor 2; and a sensor 18 that is connected with the port 10 of the microprocessor 2 in order to find the level of the supply voltage 19 of the microprocessor 2.

The device 1 is supplied by a battery 20, typically the 9V type, and a tension stabiliser 21 is provided that lowers (and stabilises) the value of the voltage of battery 20 to 3V, as required by the microprocessor 2. The battery 20 also supplies the bistable valve 16.

The device 1 externally looks as in figure 2, with the keyboard 14 that comprises three keys, the keys 23 and 24 respectively marked with " + " and " - " and a key 25 (called ENTER) interposed between them; over the keyboard 14 the display 12 is superimposed which comprises a numerical readout 40 with four segment digits, six flashing arrows 41-46 that are respectively associated with the words "Time", "Dates", "Run", "Day", "Man" and "Start", two dots 51, a date indicator 50 with the numbers of all the possible days in a month, and the word "EXIT". The numbers corresponding to the days of the month and the word EXIT are printed in a permanent way on the front part of the display 12 whereas under every number and EXIT a rectangle is present (not visible in Fig. 2) that can be lit up or not in order to show the enabling or the disabling of the numbers and of the words.

The memory block 4 contains the program (firmware) that must be executed by the microprocessor 2. In the memory block 5 the complete calendar from 1.1.2000 to 31.12.2099 is memorised, that is visualisable one year at the time starting from the date being set, and in addition, in the programming stage, one memorises: the current hour and minute; the instant (hour and minute) of the beginning of the watering period and the duration of the same watering period; the days of every month of an entire year of watering; the data for the control of the control circuit 11.

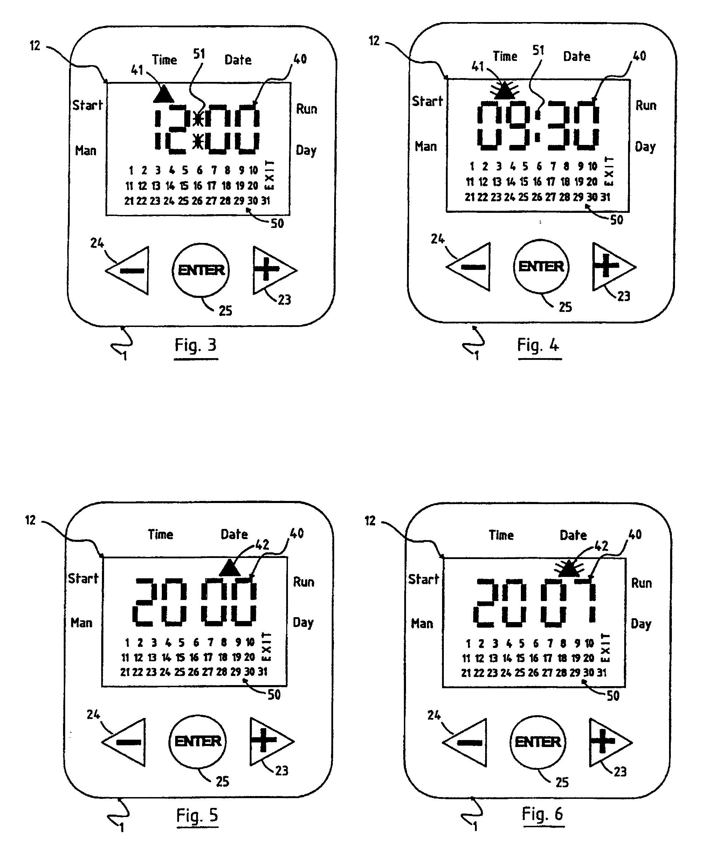

In order to enter the programming data on behalf of the user, the device according to the present invention operates in the following way, as illustrated in the figures 3-22.

Substantially, the user, by operating on the keys 23 and 24 sends to the microprocessor 2 opportune commands for the visualisation of a menu that is structured into pages, each one corresponding to the setting function of a respective group of data; the microprocessor 2 visualises the pages of the menu on the display 12 in a sequential way, as a consequence of the pressure on the keys 23 and 24, and on the display each time one of the arrows 41-46 gets lit in order to indicate the selected page of the menu. In order to proceed to the setting of a particular group of data the relative page of the menu must be selected by pressing the key 25 with the consequent flashing of the corresponding arrow. Subsequently the keys 23 and 24 allow the user to set up the desired data, that the microprocessor 2 visualises on the display 12 in order to allow the user to verify its correctness. At the end of this operation, by operating on the key 25, the data being set are memorised in the memory block 5, and the programming procedure is ceased; the keys 23 and 24 therefore assume again their original function of visualisation and selection of the menu pages.

The operation of device 1 is the following.

When starting the device 1 the microprocessor 2 reads the starting configuration of the memory block 4 and it memorises it in the memory block 5, therefore it visualises on the display 12 the first page of the menu that corresponds to the setting of the current hour with the arrow 41 lit to indicate the "Time" position (Figure 3). On the numerical readout 40 of the display the hour and the minute of the internal clock of the device appear in numerical form (it consists of a clock realised via software, made up of locations of the memory 5 that are periodically modernised by the central processing unit 3) with the two dots 51 flashing so as to indicate the working of the clock.

In order to activate the procedure for the setting of the current hour the user must press the key 25; the enabling of such procedure is indicated by the still lighting of two dots 51 and by the flashing of the arrow 41. Subsequently with the keys 23 and 24 the current hour and the minutes are set on the numerical readout 40 (Figure 4) and then the hour and the minutes are confirmed by a pressure on the key 25, that makes flashing the two dots 51 that were before still and stops the arrow 41 that was before flashing.

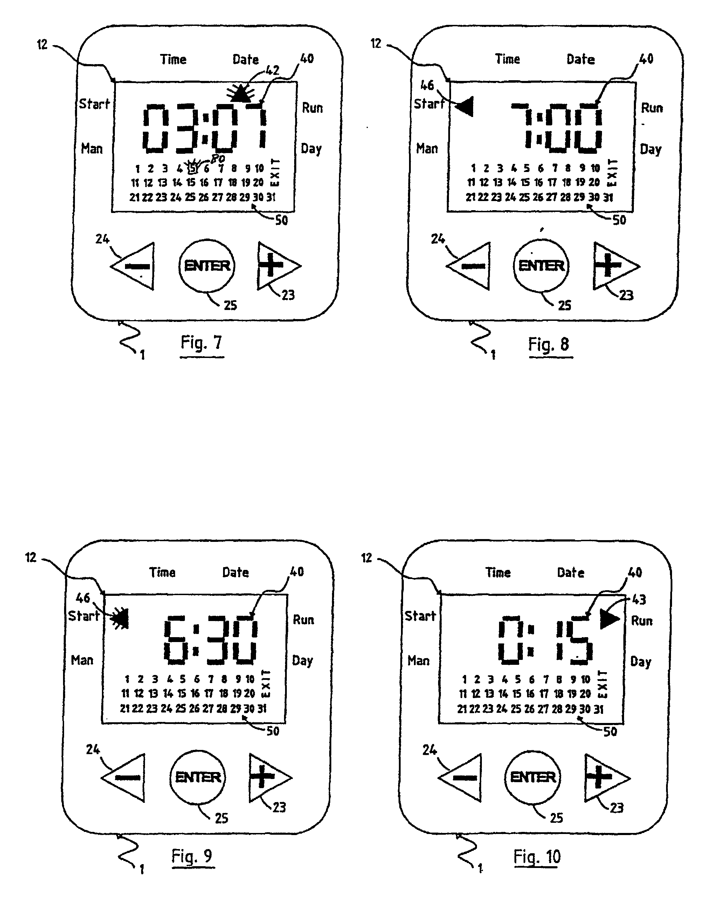

Subsequently, through the key "+" the menu page is changed thus passing to the page regarding the setting of the current date; the lighting of the arrow 42 identifies the position "Date" (Figure 5). In order to activate the procedure for the setting of the current date the user must press the key 25; the enabling of such procedure is indicated by the flashing of the arrow 42. The calendar memorised in the locations of the memory block 5 runs, as already said, from 01.01.2000 to 31,12,2099. First on the display the pre-established year appears in numerical shape (2000); subsequently with the keys 23 and 24 the current year is set by confirming it with the key 25 (Figure 6). Subsequently the day and the month together can be set (for instance 5 March) by means of the additional use of the keys 23 and 24 that allow to scroll the days of the calendar by means of lighting of a cursor 80 under the days 50 until the desired day has been reached. The movement of the aforesaid cursor allows to automatically adjust (at the beginning or at the end of month) the number of the month, that it is indicated by the two left digits of the numerical readout 40, while on the two digits at the right of same numerical readout 40 the indication of the two less meaningful digits of the year that had previously been set remains still (figure 7); the additional pressure on the key 25 confirms the setting.

Subsequently the menu page is changed with the key "+" thus passing to the page regarding the setting of the time of beginning of the watering period, that is signalled by the lighting of the arrow 46 in the "Start" position (Figure 8). In order to activate the procedure for the setting of the time of the beginning of the watering period the user must press the key 25; the enabling of such procedure is indicated by the flashing of the arrow 46. On the display the pre-set time (7.00) appears in numerical form; subsequently with the keys 23 and 24 the hour and the minutes of the instant of the start of the watering period (for instance 6.30) can be set, by confirming them with the key 25 (Figure 9).

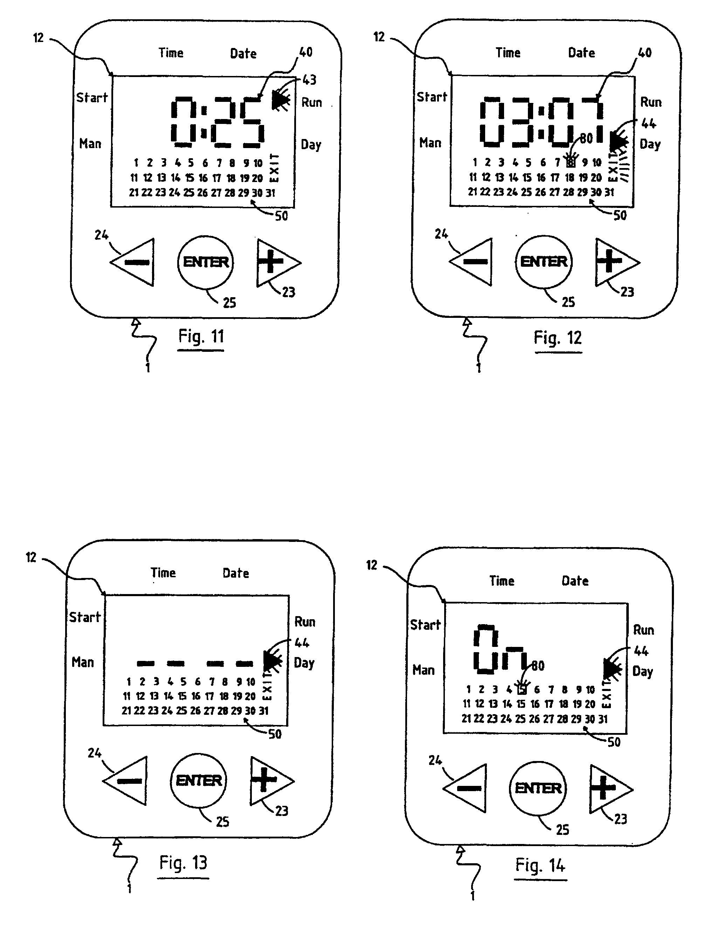

Subsequently the menu page is changed with the key "+" thus passing to the page regarding the setting of the duration of the watering period, that is signalled by the lighting of the arrow 43 in the position ''Run'', while on the display the pre-set duration (0:15) appears in numerical form (Figure 10). In order to activate the procedure for the setting of the duration of the watering period the user must press the key 25; the enabling of such procedure is indicated by the flashing of the arrow 43; subsequently with the keys 23 and 24 the hour and the minutes of the duration of the watering period can be set, by confirming with the key 25 (Figure 11).

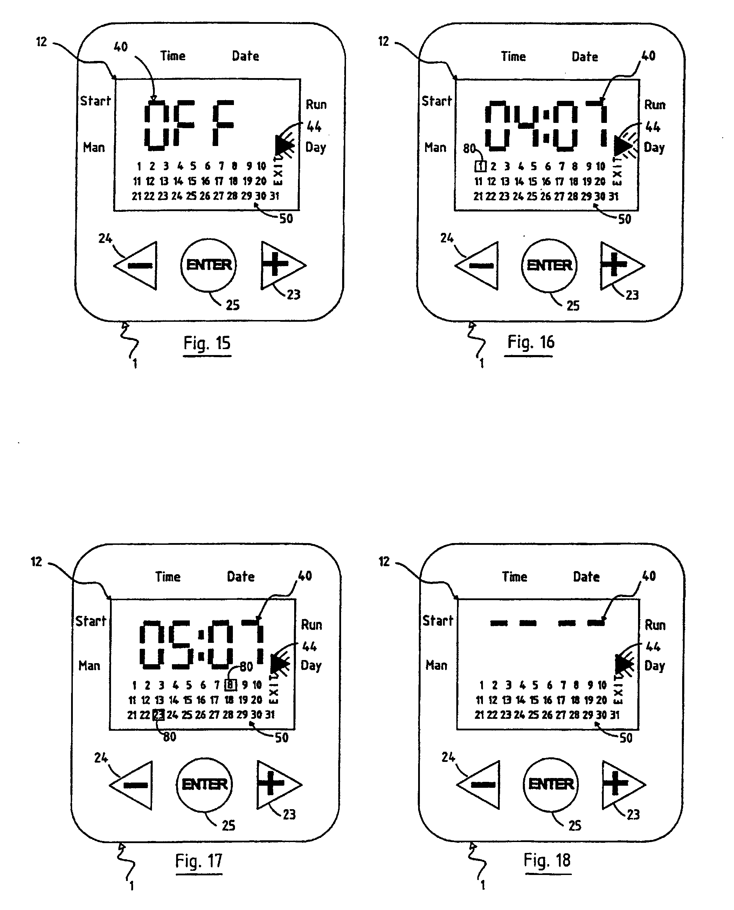

Subsequently the menu page is changed with the key "+" thus passing to the page regarding the dates comprising the day, the month and the year in which the watering must be carried out, with relative lighting of the arrow 44 in the position "Day". On the display the pre-set year and month appear in numerical form ("03:07" that means the month of March ("03") of the year 2007 ("07"). By pressing the key 25 the procedure for the setting of the dates of the watering periods is enabled with the arrow 44 in the position "Day", the word "EXIT" and cursor 80 (under the current day if it is the first time that the procedure is being activated or under the day in which the cursor was left the previous time in which such procedure was activated) all flashing (figure 12). Subsequently by pressing the key 23 or 24 the flashing cursor 80 is moved below one of the days of the date indicator 50 thus allowing the selection of any day of the month of March (for instance the 5th). In case that the cursor 80 points to the current day, by pressing the key 24 only the bottom dotted segment appears on display so as to indicate that it is not possible to program yesterday (Figure 13). The confirmation of the day being selected for the watering period is done with a pressure on the key 25; on the numerical readout 40 the word "ON" appears until the key 25 remains pressed and the cursor 80 under the confirmed day will remain steadily lit (Figure 14). The same day that had previously been confirmed can be cancelled by reselecting it with the keys 23 and 24 and by subsequently pressing the key 25; in such case the word "OFF" appears on the numerical readout 40 until the key 25 remains pressed and the cursor 80 under the confirmed day remains steadily off in order to indicate that the cancelling of the day has been carried out (figure 15). It is possible to program more than one day of the month of January by moving the cursor 80 forward or back with the keys "+" or "-", which allow to select one by one the desired days and subsequently to confirm each one of them by the pressure of the key 25. Once the current month is concluded, with an additional pressure of the key 23 one shifts to the following month of the year 2007, numerically indicated as "04:07" in Figure 16, and one can provide to the selection of the desired days of April according to what above described for the month of March. Once the month of April is concluded in the same way one shifts to the month of May, numerically indicated as "05:07" in Figure 17 with the cursor 80 below the selected lit days, and so on for every month of the year 2007 until the day of the year subsequent to the current year corresponding to the day preceding the current day, in the example being considered, 4 March 2008 . In case the cursor 80 points to the last day available, by pressing the key 23 only the top dotted segment appears on the display so as to indicate that it is not possible to program the current day of the next year (Figure 18).

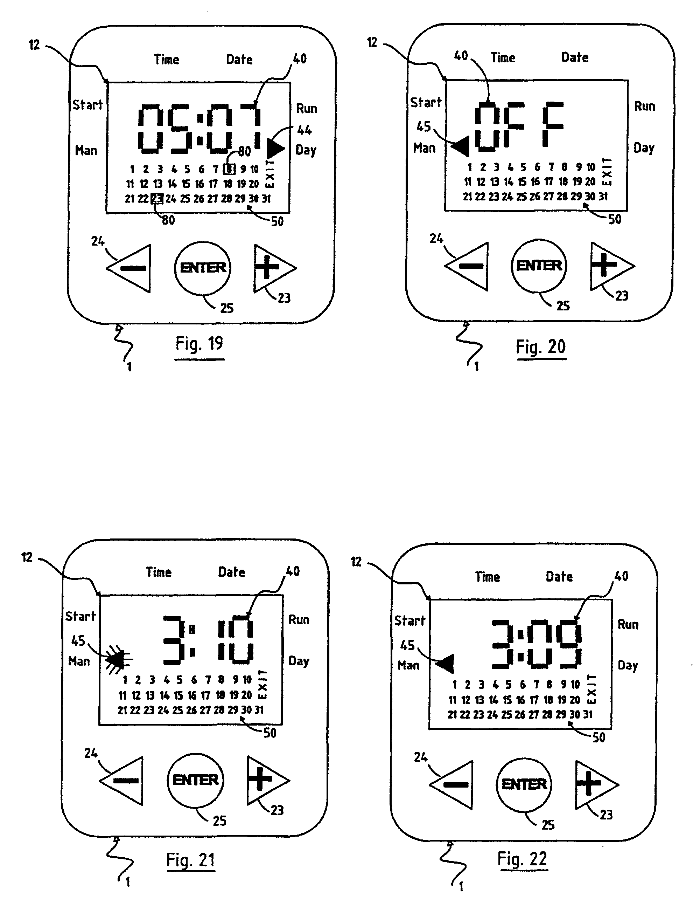

In order to exit the menu page concerning the setting of a single date or more dates for the execution of the watering, the user must press at the same time the keys "+" and "-" corresponding to the function EXIT. In such way the selected days of the month in which one is operating and the arrow 44 will remain visualised (Figure 19).

If the user wishes to operate the manual control of the device, it is necessary, by operating on the keys 23 and 24, to go to the menu page regarding the manual control procedure of the device that is indicated by the presence of the arrow 45 in the position "Man" (Figure 20). On the numerical readout 40 the word "OFF" gets visualised and subsequently by pressing the key 25 the manual control procedure of the device is activated with the arrow 45 flashing. The user must operate on the keys 23 and 24 in order to set up the duration, in hours and minutes, of the watering period, for instance "03 : 10" that means 3 hours and ten minutes (Figure 21). By subsequently pressing the key 25 the user starts the watering, the count of the remaining time starts and the arrow 45 stops flashing (Figure 22). In the case in which, by selecting the function "Man", a time with the two flashing dots 51 is visualised, this is to indicate that the control valve is open. In such condition the pressure on the key 25 would control the closing of the valve and the display would go back to display "OFF".

## Claims

1. Electronic device for the control of watering systems comprising valve means (16) for the interception of a watering fluid, comprising a processing unit (2) that controls the opening and the closing of said valve means (16) and that is provided with at least one memory (5) to memorise programming data of the watering , said watering programming data being organised as a plurality of menu pages, a visualisation device (12) that is controlled by said processing unit, each of said pages including a respective group of programming data for the watering and being separately visualisable on said visualisation device (12), and one keyboard (14) that is operatively connected with said processing unit (2), said keyboard (14) comprising a first (23), a second (25) and a third keys (24) to control the visualisation of the watering programming data on said visualisation device (12), the second key (25) being operable to activate a procedure for the input of and/or change of programming data of the watering in the page of the currently visualised menu and to memorise the new programming data at the end of said procedure, the first (23) and the third key (24) being operable to enter and/or to change the data of the programming of the watering in the page of the currently visualised menu during said procedure and in addition being operable to change the currently visualised page on said visualisation device when said procedure is not activated, **characterised in that** said memory (5) of the processing unit (2) contains the data of the calendar of at least one year and said visualisation device (12) is provided with a date indicator (50) for the visualisation of days of the month, said menu comprising one page for setting the watering days of every month of at least one year, and said first (23) and third (24) key being operable for sequentially moving through the days of every month of at least one year and selecting said watering days, the selected watering days being visualisable on said date indicator (50).

2. Device according to claim 1, **characterised in that** it comprises a luminous cursor (80) that is movable from one day to another of said date indicator (50) under the control of said first (23) and third (24) key for the selection of the watering days of every month.

3. Device according to claim 1, **characterised in that** it comprises luminous means (41-46) for the indication of the menu page.

## Patentansprüche

1. Elektronische Steuereinrichtung für Bewässerungssysteme, welche Ventileinrichtungen (16) zur Unterbrechung eines Bewässerungsfluids aufweisen, wobei die elektronische Steuereinrichtung eine Verarbeitungseinheit (2) aufweist, welche das Öffnen und Schließen der Ventileinrichtungen (16) steuert, und die wenigstens einen Speicher (5) zur Speicherung von Programmdaten für die Bewässerung aufweist, wobei die Bewässerungsprogrammdaten als eine Mehrzahl von Menüseiten organisiert sind, eine Sichtanzeigeeinrichtung (12) vorgesehen ist, die durch die Verarbeitungseinheit gesteuert wird, wobei jede Seite eine zugeordnete Gruppe von Programmdaten für die Bewässerung umfaßt und auf der Sichtanzeigeeinrichtung (12) gesondert anzeigbar ist, und eine Tastatur (14) vorgesehen ist, welche mit der Verarbeitungseinheit (12) betriebsmäßig verbunden ist, wobei die Tastatur (14) eine erste (23), eine zweite (25) und eine dritte Taste (24) zur Steuerung der Sichtanzeige der Bewässerungsprogrammdaten auf der Sichtanzeigeeinrichtung (12) aufweist, die zweite Taste (25) zur Aktivierung einer Prozedur zum Eingeben von und/oder zum Ändern von Programmdaten für die Bewässerung auf der Seite des momentan sichtbar angezeigten Menüs und zum Speichern der neuen Programmdaten am Ende dieser Prozedur betätigbar ist, die dritte (23) und die vierte Taste (24) zum Eingeben und/oder zum Ändern der Programmdaten für die Bewässerung auf der Seite des momentan sichtbaren, gezeigten Menüs während der Prozedur betätigbar ist, und zusätzlich zum Ändern der momentan sichtbaren, gezeigten Seite auf der Sichtanzeigeeinrichtung betätigbar ist, wenn die Prozedur nicht aktiviert ist, **dadurch gekennzeichnet, daß** der Speicher (5) der Verarbeitungseinheit (2) Kalenderdaten wenigstens eines Jahres enthält, und die Sichtanzeigeeinrichtung (12) mit einer Datumsanzeige (50) zur Sichtanzeige von Tagen des Monats versehen ist, daß das Menü eine Seite zur Vorgabe der Bewässerungstage jedes Monats von wenigstens einem Jahr aufweist, und daß die erste (23) und die dritte (24) Taste zum sequentiellen Bewegen durch die Tage jedes Monats von wenigstens einem Jahr betätigbar sind, und die Bewässerungstage wählt, wobei die gewählten Bewässerungstage auf der Datumsanzeige (50) sichtbar angezeigt werden.

2. Elektronische Steuereinrichtung nach Anspruch 1, **dadurch gekennzeichnet, daß** sie wenigstens einen Leuchtcursor (80) aufweist, welcher von einem Tag zum anderen der Datumsanzeige (50) unter der Steuerung der ersten (23) und der dritten (24) Taste für die Wahl der Bewässerungstage jedes Monats bewegbar ist.

3. Elektronische Steuereinrichtung nach Anspruch 1, **dadurch gekennzeichnet, daß** sie eine Beleuchtungseinrichtung (41-46) zur Anzeige der Menüseite aufweist.

## Revendications

1. Dispositif électronique destiné à commander des systèmes d'arrosage comportant des moyens vannes (16) servant à l'interception d'un fluide d'arrosage, comprenant une unité de traitement (2) qui commande l'ouverture et la fermeture desdits moyens vannes (16) et qui est dotée d'au moins une mémoire (5) afin de mémoriser des données de programmation pour l'arrosage, lesdites données de programmation d'arrosage étant organisées sous la forme d'une pluralité de pages de menu, un dispositif de visualisation (12) qui est commandé par ladite unité de traitement, chacune desdites pages comportant un groupe respectif de données de programmation pour l'arrosage et pouvant être visualisée séparément sur ledit dispositif de visualisation (12), et un clavier (14) qui est fonctionnellement connecté avec ladite unité de traitement (2), ledit clavier (14) comprenant une première touche (23), une deuxième touche (25) et une troisième touche (24) servant à commander la visualisation des données de programmation d'arrosage sur ledit dispositif de visualisation (12), la deuxième touche (25) ayant pour fonction d'activer une procédure relative à l'introduction et, ou bien, à la modification de données de programmation de l'arrosage dans la page du menu en cours de visualisation et de mémoriser les nouvelles données de programmation à la fin de ladite procédure, les première et troisième touches (23 et 24) ayant pour fonction d'introduire et, ou bien, de modifier les données de la programmation de l'arrosage dans la page du menu en cours de visualisation pendant ladite procédure et ayant de plus pour fonction de changer la page en cours de visualisation sur ledit dispositif de visualisation lorsque ladite procédure n'est pas activée, **caractérisé en ce que** ladite mémoire (5) de l'unité de traitement (2) contient les données du calendrier d'au moins une année et ledit dispositif de visualisation (12) est doté d'un indicateur de date (50) servant à visualiser les jours du mois, ledit menu comprenant une page destinée à la fixation des jours d'arrosage de chaque mois d'au moins une année, lesdites première et troisième touches (23 et 24) ayant pour fonction de produire un déplacement séquentiel à travers les jours de chaque mois d'au moins une année et de sélectionner lesdits jours d'arrosage, les jours d'arrosage sélectionnés pouvant être visualisés sur ledit indicateur de date (50).

2. Dispositif selon la revendication 1, **caractérisé en ce qu'**il comprend un curseur lumineux (80) qui peut être déplacé d'un jour à un autre dudit indicateur de date (50) sous commande desdites première et troisième touches (23 et 24) en vue de la sélection des jours d'arrosage de chaque mois.

3. Dispositif selon la revendication 1, **caractérisé en ce qu'**il comprend un moyen lumineux (41-46) servant à l'indication de la page de menu.
